Europäisches Patentamt

European Patent Office

Office européen des brevets

(11) Publication number: **0 286 923 B1**

## EUROPEAN PATENT SPECIFICATION

(45) Date of publication of patent specification: **27.05.92** (51) Int. Cl.⁵: **B60J 5/04**

(21) Application number: **88105308.6**

(22) Date of filing: **31.03.88**

(54) **Vehicle door with separable door hardware module.**

(30) Priority: **14.04.87 US 50508**

(43) Date of publication of application:
**19.10.88 Bulletin 88/42**

(45) Publication of the grant of the patent:
**27.05.92 Bulletin 92/22**

(84) Designated Contracting States:
**DE FR GB IT SE**

(56) References cited:
**EP-A- 0 128 621**
**WO-A-81/03467**
**FR-A- 2 543 890**
**US-A- 4 306 381**

(73) Proprietor: **THE BUDD COMPANY**
**3155 W. Big Beaver Road**
**Troy, MI 48084(US)**

(72) Inventor: **Grier, Donald Alexander**
**15305 Dominique**
**Mt Clemens Michigan 48044(US)**
Inventor: **Nielson, Theodore Oliver, Jr.**
**1129 C.Kirts**
**Troy Michigan 48084(US)**

(74) Representative: **Finck, Dieter et al**
**Patentanwälte v. Füner, Ebbinghaus, Finck**
**Mariahilfplatz 2 & 3**
**W-8000 München 90(DE)**

## Description

The invention relates to a vehicle door comprising an inner panel secured to an outer panel to form a main door unit, means for mounting the main door unit to a body for a vehicle, a lower hollow cavity defined by the inner panel and the outer panel, a door hardware module having a plate to which door hardware including a window glass, glass track sections and window regulator means for controlling vertical movement of the window glass is attached, and an opening for inserting the door hardware module into the cavity (see EP-A-0128621).

US-A-4306381 discloses a vehicle door having an inner panel and an outer panel. On the inner side of the inner panel facing the outer panel a hardware mounting plate is secured carrying a window frame and a window mechanism for moving the window up and down, such forming an inner sub-assembly. The outer panel is provided with a door beam and a halo panel such forming an outer sub-assembly. The inner subassembly is thereafter attached to the outer sub-assembly forming a main door unit. In the inner sub-assembly small access openings are provided. It is envisioned that the inner sub-assembly is produced off-line and then attached as one of the final steps during on-line assembly.

With this arrangement some of the parts of the inner subassembly are exposed and accordingly must be painted to match the rest of the door. Consequently, it appears that this would require that the on-line and off-line assembled parts of the vehicle door be separately painted. Of course, it is not always possible to provide a perfect colour match under these circumstances.

US-A-2707 320 describes a vehicle door comprising an outer and an inner panel secured together in lateral spaced relationship to provide a well below the usual window opening in the upper portion of the door for receiving a vertically slidable window panel. In the inner panel an opening is provided having a top portion registrable with the window opening in the vehicle door and a bottom portion registrable with the window well. The opening of the inner panel is covered by a closure plate which is detachably secured to the inner panel by fasteners and on which door hardware is mounted including window glasses. As the opening is unclosed on its upper part, additional stiffening flanges must be provided.

EP-A-0128621 A1 discloses a vehicle door of the generic kind comprising an outer panel and an inner panel forming a cavity therebetween. An opening is provided on the bottom part of the main door unit consisting of the inner panel and the outer panel and an upper window glass frame. A mounting plate carrying the door hardware and the glass track sections is introduced through this bottom opening from below. Aligning and securing of the mounting plate from below is rather difficult, as there are only small access openings in the inner panel.

It is the object of the invention to provide a vehicle door of the generic kind which permits an easy mounting of door hardware without problems as to door stiffness and colour match.

This object is achieved with a vehicle of the generic kind in that the opening is an enlarged opening generally centrally located in the inner panel, the door hardware comprises only lower glass track sections, means for attaching the door hardware module to the inner door panel are provided, and the plate is flush against the face of the inner panel which faces toward the interior of the vehicle and covers the enlarged opening.

Thus, the main door unit is designed to be mounted to the vehicle body as is conventional practice during on-line assembly. This enables the main door unit to be painted along with vehicle body to thereby ensure good colour matching. However, when the vehicle is painted, the door hardware module is not yet attached. On the contrary, the door hardware module can be completely assembled off-line, for example, by a vendor to the vehicle manufacturer. None of the parts on the door hardware module need to be painted and, consequently, colour matching is no problem. In addition, the door hardware module is preassembled into one substantially integral unit ready for easy attachment as will appear. Consequently, the awkward step-by-step attachment of door hardware through small access openings discussed above is substantially eliminated. The vehicle manufacturer also benefits from an improvement in overall product quality.

Preferably the lower glass track sections on the door hardware module are detachably coupled to other glass track sections within a window frame portion of the main door unit thereby bringing the lower glass track sections and the upper glass track sections into alignment.

This can be easily carried out if the upper edges of the lower glass track sections include an enlarged head with a detent on the side thereof, and if the lower edges of the upper glass track sections slidingly fit within the head and include a spring clip for engaging said detent.

Advantageously the peripheral dimension of the plate is larger than that of the opening and the plate is attached to the inner panel about its periphery by a plurality of fasteners.

Further, a trim pad covering the plate and exposed peripheral portions of the inner face of the inner panel can be provided.

If the door hardware includes at least one wiring harness, said plate includes at least one access opening therein permitting worker access to the harness.

Usually the plate is preprimed galvanized steel.

The plate may also include a doubler reinforcement member attached thereto onto which at least part of the window regulator means is attached.

For making the vehicle door the inner panel and the outer panel of the main door unit are substantially simultaneously painted with remaining portions of the vehicle body. Thereafter the door hardware module is assembled to the vehicle door so that the window glass passes through the opening in the inner panel and between the upper portion of the inner panel and the outer panel, the associated door hardware extends through the cavity, and the plate covers the opening in the inner panel.

By means of drawings an embodiment of the invention is described.

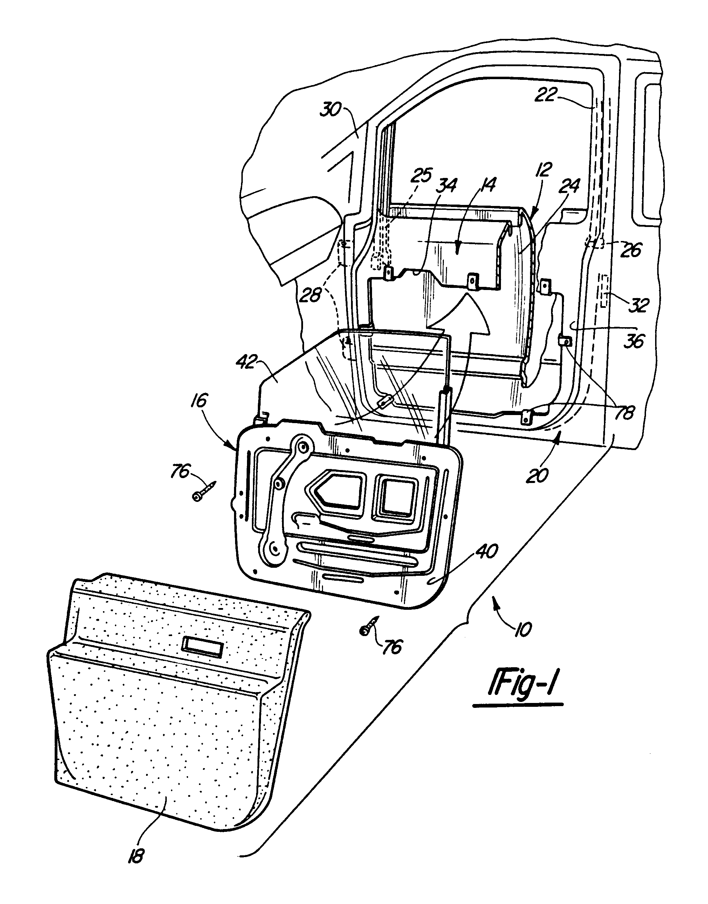

Fig. 1     is a partial exploded perspective view of a vehicle including a vehicle door as viewed from the interior of the vehicle,

Fig. 2     is an exploded perspective view primarily of the door hardware module as viewed from a side opposite to that of fig. 1,

Fig. 3     is a partial perspective view illustrating the detachable coupling between upper and lower glass track section, and

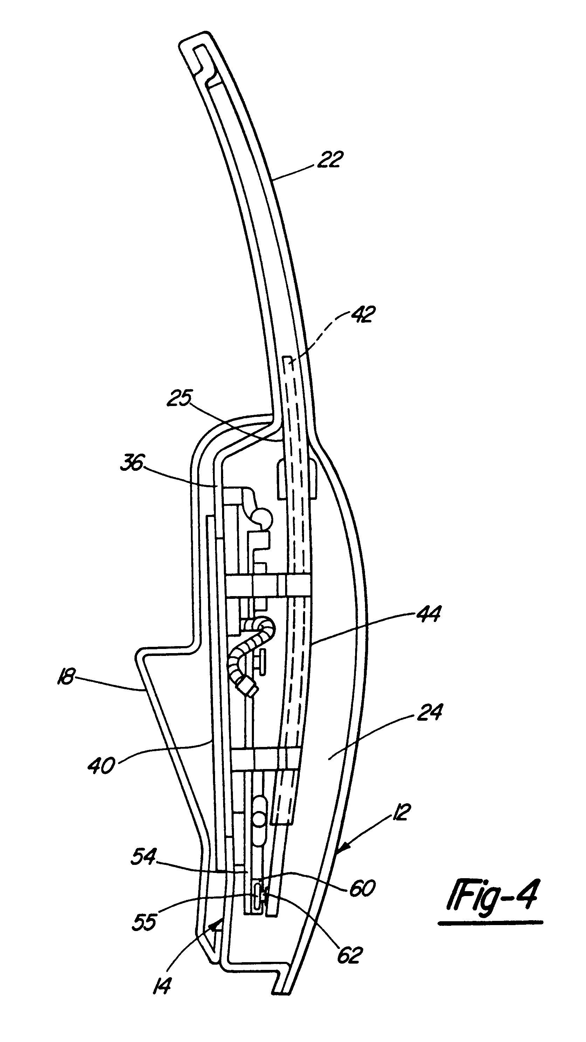

Fig. 4     is a simplified cross-sectional view of the completed vehicle door.

The vehicle door 10 as shown in the drawings includes four main parts, namely an outer panel 12, an inner panel 14, a door hardware module 16 and an interior trim pad 18. The outer panel 12 and inner panel 14 are secured together to form a main door unit 20 which, to a large extent, is of conventional design. In this example, the outer panel 12 and inner panel 14 are metal stampings which are hemmed together to provide a window frame portion 22 above the belt line and defining a hollow interior cavity 24 below the belt line. The window frame portion 22 encompasses upper front 25 and rear glass track sections for receiving upper edges of the window when it is in its raised position. As conventional, window frame 22 also includes suitable weather stripping and the like. One side of the main door unit 20 also includes suitable hinge devices 28 for swingingly mounting main door unit 20 onto the body of the vehicle 30 in a conventional manner. Main door unit 20 may also include suitable locking mechanisms designated by the numeral 32.

A study of the drawings will reveal that the inner panel 14 includes a generally centrally located enlarged opening 34 in its inner face 36. Opening 34 is dimensioned so that it will permit the window and associated door hardware on module 16 to be inserted therethrough as will be discussed later herein.

Focusing attention on module 16, it is provided with a mounting plate 40 whose peripheral dimensions are larger than the door opening 34. Plate 40 is preferably made of preprimed galvanized steel or other rigid material that is rust resistant. Onto plate 40 is attached window glass 42, lower front 44 and rear 46 window glass track sections and suitable window regulating means for controlling vertical movement of window 42. The window regulator means illustrated in the drawings include electric motor 50 driving a sector gear 52 coupled to an arm 54 through a link 56. The door regulator mechanisms are preferably attached to a doubler reinforcement member 58 suitably attached to plate 40 to provide it with additional rigidity. Window regulator arm 54 is provided with a roller 55 at its distal end which rides in a glass attaching "U-channel" 60. Channel 60 is connected to the window glass 42 by way of fasteners 62. It should be understood that other automatic window regulating devices can be used, as well as manual constructions.

Completing the description of module 16, wiring harnesses 64 and 66 are illustrated for controlling the door motor 50 and auxiliary devices such as automatic door locks and the like, respectively. Preferably, a vapor and sound barrier sheet 68 is adhered to the inner face of plate 40 by way of suitable adhesive sealer 70.

Thus, it can be appreciated that the module 16 is in the form of a one-piece unit that can be assembled and tested off-line and then shipped to the vehicle manufacturer ready to be assembled to the main door unit 20.

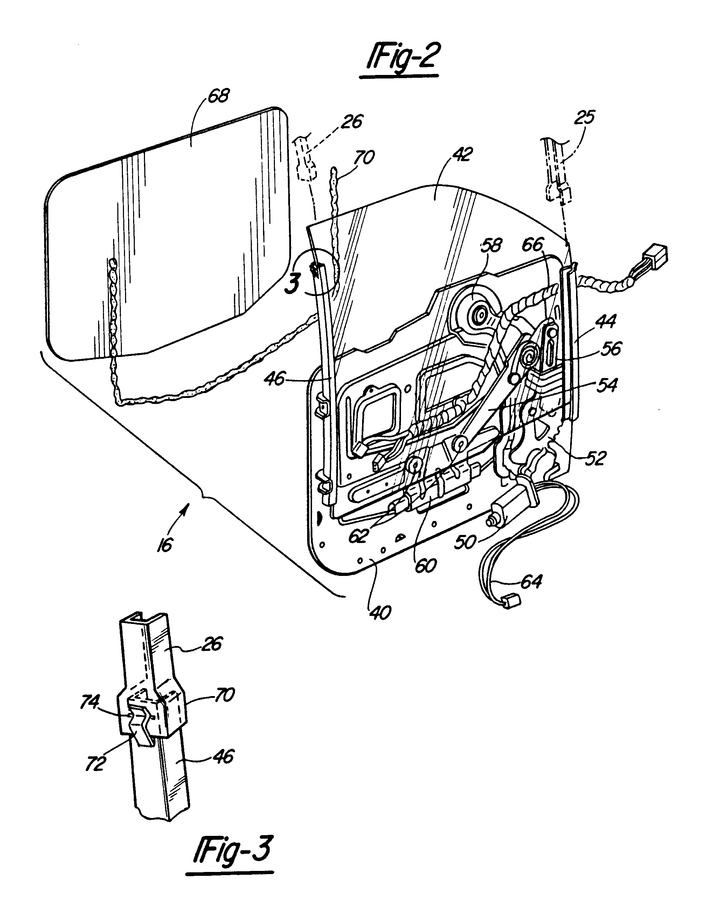

Module 16 is easily assembled by inserting the window glass 42 through opening 34 and sliding the edges of the window glass 42 into the upper glass tracks 25, 26 already contained within the main door unit 20. As can be seen most clearly in Fig. 2 and 3, lower ends of the upper glass tracks 25, 26 and upper ends of the lower glass tracks 44, 46 are interlockingly fitted together to thereby bring the two sets of track sections into permanent alignment. Various detachable coupling constructions can be used but, in this embodiment, this is provided by an enlarged head 70 on the upper sections onto which the lower sections slideably fit. A spring clip 72 on the lower glass track section 46 snaps into a detent 74 in the head when the lower glass track section 46 has been inserted to the proper extent.

Once the window glass 42 has been inserted, the plate 40 is brought flush against the inner face 36 of the inner panel 14 and attached thereto via fasteners 76 and mounting brackets 78. The peripheral dimension of plate 40 is larger than that of the opening 34 so that the plate 40 covers the opening.

To complete the door assembly, it is sometimes necessary to connect the various wiring harnesses to certain internal components such as door locks and the like. This can be easily accomplished by pulling back the sheet 68, manually making the necessary connections, and then resecuring the sheet 68. Therefore, the plate 40 and the remaining exposed peripheral portions of the lower/inner panel 14 are covered by a conventional trim pad 18.

**Claims**

1.  A vehicle door comprising
    -   an inner panel (14) secured to an outer panel (12) to form a main door unit (20),
    -   means (28) for mounting the main door unit (20) to a body for a vehicle (30),
    -   a lower hollow cavity (24) defined by the inner panel (14) and the outer panel (12),
    -   a door hardware module (16) having a plate (40) to which door hardware including a window glass (42), glass track sections (44, 46) and window regulator means (50, 52, 54, 56) for controlling vertical movement of the window glass (42) is attached and
    -   an opening (34) for inserting the door hardware module (16) into the cavity (24),
        **characterized**
    -   in that the opening (34) is an enlarged opening generally centrally located in the inner panel (14),
    -   in that the door hardware comprises lower glass track sections (44, 46),
    -   in that means (76, 78) for attaching the door hardware module (16) to the inner panel (14) are provided and
    -   in that the plate (40) is flush against the face (36) of the inner panel (14) which faces toward the interior of the vehicle (30) and covers the enlarged opening (34).

2.  Vehicle door according to claim 1, **characterized** in that said lower glass track sections (44, 46) on the door hardware module (16) are detachably coupled to upper glass track sections (25, 26) within a window frame portion (22) of the main door unit (20) thereby bringing the lower glass track sections (44, 46) and the upper glass track sections (25, 26) into alignment.

3.  Vehicle door according to claim 2, **characterized** in that upper edges of the lower glass track sections (44, 46) include an enlarged head (70) with a detent (74) on a side thereof, and in that lower edges of the upper glass track sections (25, 26) slidingly fit within the head (70) and include a spring clip (72) for engaging said detent (74).

4.  Vehicle door according to one of the claims 1 to 3, **characterized** in that the peripheral dimension of said plate (40) is larger than that of the opening (34) and in that said plate (40) is attached to the inner panel (14) about its periphery by a plurality of fasteners (76).

5.  Vehicle door according to one of the claims 1 to 4, **characterized** by a trim pad (18) covering said plate (40) and exposed peripheral portions of said inner face (36) of the inner panel (14).

6.  Vehicle door according to one of the claims 1 to 5, **characterized** in that said door hardware further includes at least one wiring harness (64, 66) and in that said plate (40) includes at least one access opening therein permitting worker access to the harness (64,66).

7.  Vehicle door according to one of the claims 1 to 6, **characterized** in that said plate (40) is preprimed galvanized steel.

8.  Vehicle door according to one of the claims 1 to 7, **characterized** in that said plate (40) includes a doubler reinforcement member (58) attached thereto onto which at least part of said window regulator means (50, 52, 54, 56) is attached.

9.  A method of making a vehicle which includes a vehicle door according to at least one of the preceding claims, **characterized** by
    -   attaching the main door unit (20) to the body of a vehicle (30)
    -   painting the main door unit (20) substantially simultaneously with the remaining portions of the vehicle body (30) and
    -   assembling the door hardware module (16) to the vehicle door so that the window glass (42) passes through the opening (34) in the inner panel (14) and between the upper portion of the inner panel (14) and the outer panel (12), the associated door hardware extends through the cavity (24), and the plate (40) covers the opening (34) in the inner panel (14).

**Revendications**

1. Porte de véhicule comportant
   - un panneau intérieur (14) fixé à un panneau extérieur (12) pour former un bloc porte principal (20),
   - des moyens (28) pour le montage du bloc porte principal (20) sur une carrosserie pour un véhicule (30),
   - une cavité creuse inférieure (24) définie par le panneau intérieur (14) et le panneau extérieur (12),
   - un module (16) de matériel de porte ayant une plaque (40) à laquelle du matériel de porte comprenant une glace (42) de fenêtre, des profilés (44, 46) de chemin de glace et des moyens (50, 52, 54, 56) de réglage de fenêtre destinés à commander un mouvement vertical de glace (42) de fenêtre, est fixé, et
   - une ouverture (34) pour l'insertion du module (16) de matériel de porte dans la cavité (24),
   caractérisée en ce que
   - l'ouverture (34) est une ouverture élargie située à peu près centralement dans le panneau intérieur (14),
   - en ce que le matériel de porte comporte uniquement des profilés inférieurs (44, 46) de chemins de glace,
   - en ce que des moyens (76, 78) pour fixer le module (16) de matériel de porte au panneau intérieur (14) sont prévus, et
   - en ce que la plaque (40) est appliquée à plat contre la face (36) du panneau intérieur (14) qui est tournée vers l'intérieur du véhicule (30) et couvre l'ouverture élargie (34).

2. Porte de véhicule selon la revendication 1, caractérisée en ce que lesdits profilés inférieurs (44, 46) de chemins de glace sur le module (16) de matériel de porte sont reliés de façon amovible à des profilés supérieurs (25, 26) de chemins de glace à l'intérieur d'une partie de bâti (22) de fenêtre du bloc porte principal (20), amenant ainsi en alignement les profilés inférieurs (44, 46) de chemins de glace et les profilés supérieurs (25, 26) de chemins de glace.

3. Porte de véhicule selon la revendication 2, caractérisée en ce que des bords supérieurs des profilés inférieurs (44, 46) de chemins de glace comprennent une tête élargie (70) dont un côté présente un cran (74), et en ce que des bords inférieurs des profilés supérieurs (25, 26) de chemins de glace s'ajustent en glissant à l'intérieur de la tête (70) et comprennent une pince (72) à ressort destinée à engager ledit cran (74).

4. Porte de véhicule selon l'une des revendications 1 à 3, caractérisée en ce que la dimension périphérique de ladite plaque (40) est plus grande que celle de l'ouverture (34) et en ce que ladite plaque (40) est fixée au panneau intérieur (14) le long de sa périphérie par plusieurs organes de fixation (76).

5. Porte de véhicule selon l'une des revendications 1 à 4, caractérisée par une garniture (18) recouvrant ladite plaque (40) et des parties périphériques exposées de ladite face intérieure (36) du panneau intérieur (14).

6. Porte de véhicule selon l'une des revendications 1 à 5, caractérisée en ce que ledit matériel de porte comprend en outre au moins un faisceau de câblage (64, 66) et en ce que ladite plaque (40) présente au moins une ouverture d'accès permettant à un ouvrier d'accéder au faisceau (64, 66).

7. Porte de véhicule selon l'une des revendications 1 à 6, caractérisée en ce que ladite plaque (40) est en acier galvanisé préapprêté.

8. Porte de véhicule selon l'une des revendications 1 à 7, caractérisée en ce que ladite plaque (40) comporte un élément (58) de renforcement qui lui est fixé, sur lequel au moins une partie desdits moyens (50, 52, 54, 56) de réglage de fenêtre est fixée.

9. Procédé de réalisation d'un véhicule qui comporte une porte de véhicule selon au moins l'une quelconque des revendications précédentes, caractérisé en ce qu'il consiste
   - à fixer le bloc porte principal (20) sur la carrosserie d'un véhicule (30),
   - à peindre le bloc porte principal (20) à peu près en même temps que les autres parties de la carrosserie (30) du véhicule, et
   - à assembler le module (16) de matériel de porte sur la porte du véhicule afin que la glace (42) de fenêtre passe à travers l'ouverture (34) dans le panneau intérieur (14) et entre la partie supérieure du panneau intérieur (14) et le panneau extérieur (12), que le matériel de porte associé s'étende à travers la cavité (24) et que la plaque (40) couvre l'ouverture (34) du panneau intérieur (14).

## Patentansprüche

1. Fahrzeugtür
   - mit einer inneren Platte (14), die an einer äußeren platte (12) zur Bildung einer Haupttüreinheit (20) befestigt ist,
   - mit Einrichtungen (28) zum Halten der Haupttüreinheit (20) an einer Karosserie für ein Fahrzeug (30),
   - mit einem unteren Hohlraum (24), der von der inneren Platte (14) und der äußeren Platte (12) gebildet wird,
   - mit einem Türbauteilemodul (16), das eine Platte (40) aufweist, an welchem die Türbauteile befestigt sind, zu der ein Scheibenglas (42), Glasführungsabschnitte (44, 46) und Fensterstelleinrichtungen (50, 52, 54, 56) zum Steuern der Vertikalbewegung des Fensterglases (42) gehören, und
   - mit einer Öffnung (34) zum Einführen des Türbauteilemoduls (16) in den Hohlraum (24),
   dadurch **gekennzeichnet,**
   - daß die Öffnung (34) eine erweiterte Öffnung ist, die insgesamt zentral in der inneren Platte (14) positioniert ist,
   - daß die Türbauteile untere Glasführungsabschnitte (44, 46) aufweisen,
   - daß Einrichtungen (76, 78) zum Befestigen des Türbauteilemoduls (16) an der inneren Platte (14) vorgesehen sind und
   - daß die Platte (40) bündig an der Fläche (36) der inneren Platte (14) anliegt, die dem Innenraum des Fahrzeugs (30) zugewandt ist und die erweiterte Öffnung (34) abdeckt.

2. Fahrzeugtür nach Anspruch 1, dadurch **gekennzeichnet,** daß die unteren Glasführungsabschnitte (44, 46) an dem Türbauteilemodul (16) lösbar mit den oberen Glasführungsabschnitten (25, 26) in einem Fensterrahmenabschnitt (22) der Haupttüreinheit (20) gekoppelt sind, wodurch die unteren Glasführungsabschnitte (44, 46) und die oberen Glasführungsabschnitte (25, 26) in eine fluchtende Ausrichtung gebracht werden.

3. Fahrzeugtür nach Anspruch 2, dadurch **gekennzeichnet,** daß die oberen Ränder der unteren Glasführungsabschnitte (44, 46) einen erweiterten Kopf (70) mit einer Vertiefung (74) auf einer Seite davon aufweisen und daß die unteren Ränder der oberen Glasführungsabschnitte (25, 26) gleitend verschiebbar in den Kopf (70) passen und eine Federklammer (72) für den Eingriff in der Vertiefung (74) aufweisen.

4. Fahrzeugtür nach einem der Ansprüche 1 bis 3, dadurch **gekennzeichnet,** daß die Umfangsabmessung der Platte (40) größer als die der Öffnung (34) ist und daß die Platte (40) an der inneren Platte (14) um ihren Umfang herum durch eine Vielzahl von Befestigungseinrichtungen (76) festgelegt ist.

5. Fahrzeugtür nach einem der Ansprüche 1 bis 4, **gekennzeichnet** durch eine Ausstattungseinlage (18), die die Platte (40) und freiliegende Umfangsabschnitte der Innenfläche (36) der inneren Platte (14) abdeckt.

6. Fahrzeugtür nach einem der Ansprüche 1 bis 5, dadurch **gekennzeichnet,** daß die Türbauteile weiterhin wenigstens einen Kabelbaum (64, 66) aufweisen und daß die Platte (40) wenigstens eine Zugangsöffnung in ihr aufweist, die einem Arbeiter einen Zugang zu dem Kabelbaum (64, 66) ermöglicht.

7. Fahrzeugtür nach einem der Ansprüche 1 bis 6, dadurch **gekennzeichnet,** daß die Platte (40) vorgrundierter galvanisierter Stahl ist.

8. Fahrzeugtür nach einem der Ansprüche 1 bis 7, dadurch **gekennzeichnet,** daß die Platte (40) ein Verdoppelungsverstärkungselement (58) aufweist, an welchem wenigstens ein Teil der Fensterstelleinrichtungen (50, 52, 54, 56) befestigt ist.

9. Verfahren zur Herstellung eines Fahrzeugs, welches eine Fahrzeugtür nach wenigstens einem der vorhergehenden Ansprüche aufweist, **gekennzeichnet** durch
   - Befestigen der Haupttüreinheit (20) an der Karosserie eines Fahrzeugs (30),
   - Versehen der Haupttüreinheit (20) mit Farbe im wesentlichen gleichzeitig mit den übrigen Abschnitten der Fahrzeugkarosserie (30) und
   - Montieren des Türbauteilemoduls (16) an der Fahrzeugtür derart, daß das Scheibenglas (42) durch die Öffnung (34) in der inneren Platte (14) und zwischen dem oberen Abschnitt der inneren Platte (14) und der äußeren Platte (12) hindurchgeht, wobei sich die zugehörigen Türbauteile durch den Hohlraum (24) erstrecken und die Platte (40) die Öffnung (34) in der inneren Platte (14) abdeckt.

*Fig-1*

_IFig-2_

68

26

70

25

42

3

58

66

44

56

54

46

52

16

62

50

60

64

40

26

74

70

72

46

_IFig-3_

IFig-4